# EUROPÄISCHE PATENTSCHRIFT

(11) **EP 1 284 414 B1**
(45) Veröffentlichungstag und Bekanntmachung des Hinweises auf die Patenterteilung: **25.06.2008**
(21) Anmeldenummer: 02017386.0
(22) Anmeldetag: 02.08.2002
(51) Int. Cl.: G01M 13/02

(54) **Diagnose von Robotergetrieben**
Diagnosis of robot transmissions
Diagnose de transmissions de robots

(30) Priorität: 13.08.2001 DE 10139759
(43) Veröffentlichungstag der Anmeldung: 19.02.2003
(73) Patentinhaber: SIEMENS AKTIENGESELLSCHAFT, 80333 München (DE)
(72) Erfinder: Müller, Klaus-Dieter, 90425 Nürnberg (DE); Völkel, Thomas, 95138 Bad Steben (DE)

(56) Entgegenhaltungen:
- EP-A- 0 442 020
- EP-A- 0 625 651
- DE-A1- 3 314 005
- DE-A1- 4 101 985
- DE-A1- 19 545 008
- DE-A1- 19 902 326
- US-A- 4 806 066
- US-A- 5 049 797
- US-A- 5 353 238
- US-A- 5 511 422
- US-A- 5 646 350
- US-A- 5 767 648
- US-A- 5 825 657
- US-A- 6 098 022
- US-A- 6 116 089
- US-B1- 6 175 793
- US-B1- 6 202 491
- PATENT ABSTRACTS OF JAPAN Bd. 013, Nr. 422 (P-933), 20. September 1989 (1989-09-20) & JP 01 153933 A (FUJI ELECTRIC CO LTD), 16. Juni 1989 (1989-06-16)

## Beschreibung

Die Erfindung betrifft ein Verfahren und ein System zur Diagnose von Robotergetrieben, insbesondere zur frühzeitigen Erkennung von Schäden.

In der Fertigungsindustrie, z. B. bei der PKW-Fertigung, wird eine große Anzahl von Robotern eingesetzt. Diese Roboter finden bei den verschiedensten Aufgaben (Schweißen, Lackieren, usw.) Anwendung. Die Länge der Inspektionsintervalle eines solchen Roboters wird aus betrieblichen Gründen zunehmend größer gewählt oder es wird sogar zugunsten einer außerplanmäßigen Instandsetzung auf die regelmäßige Inspektion ganz verzichtet. Die Robotergetriebe werden überhaupt nicht (Fahren auf "crash") oder in großen Zeitabständen getauscht. Ein unvorhergesehener Ausfall eines Roboters aufgrund von Getriebeschäden (z. B. Zahnbruch) kann dann Stillstandszeiten der gesamten Fertigungsanlage verursachen. Der Roboter muss im Fehlerfall außerplanmäßig repariert oder sogar ganz getauscht werden.

Das Dokument US 5,049,797 offenbart ein System und ein Verfahren zur Dämpfung von Schwingungen an einem Robotersystem. Hierzu ist eine Sensorik von Schwingungssignalen sowie ein Analog/Digital-Wandler zur Digitalisierung dieser Signale vorgesehen. Mittels einer Recheneinheit wird ein Signal erzeugt, das nach Verstärkung zur Dämpfung der ungewünschten Schwingungen einem Motor zugeführt wird. Dabei sind die dem Motor zugeführten Dämpfungssignale um 180° gegenüber den gemessenen Schwingungssignalen phasenverschoben.

Der Erfindung liegt die Aufgabe zugrunde, die Diagnose von Robotergetrieben zu verbessern.

Diese Aufgabe wird durch ein Verfahren zur Erkennung von Schäden an mindestens einem Getriebe eines Roboters gelöst, bei welchem Verfahren durch eine Sensorik am Getriebe in Messzyklen Schwingungssignale gemessen werden, die Schwingungssignale einer Signalvorverarbeitung und einer Analog/Digital-Wandlung unterzogen werden, die vorverarbeiteten und gewandelten Schwingungssignale als Zeitdaten einer Recheneinheit zugeführt werden, die Zeitdaten durch die Recheneinheit mittels Transformationen in zweite Daten umgerechnet werden und aus den zweiten Daten Kennwerte zur Ermittlung einer Aussage über den Zustand des Getriebes bestimmt werden.

Diese Aufgabe wird durch ein System zur Erkennung von Schäden an mindestens einem Getriebe eines Roboters gelöst, welches
- eine Sensorik am Getriebe zur Messung von Schwingungssignalen in Messzyklen,
- eine Signalvorverarbeitung und eine Analog/Digital-Wandlung zur Verarbeitung bzw. Wandlung der Schwingungssignale in Zeitdaten und
- eine Recheneinheit zur Umrechnung der Zeitdaten mittels Transformationen in zweite Daten und zur Bestimmung von Kennwerten aus den zweiten Daten aufweist,
wobei die Kennwerte zur Ermittlung einer Aussage über den Zustand des Getriebes vorgesehen sind.

Der Erfindung liegt die Erkenntnis zugrunde, dass sich Rückschlüsse auf die Lebensdauer sowie auf sich anbahnende Schäden bei Getrieben aufgrund einer Veränderung der Schwingungscharakteristik der Getriebe ziehen lassen. Durch Verschleiß, durch Alterung sowie durch Verbrauch von Schmierstoffen ändern sich mit zunehmender Nutzungsdauer die physikalischen Eigenschaften und Umgebungsbedingungen eines Getriebes. Diese Änderungen machen sich im Frequenzspektrum des Getriebes bemerkbar und sind somit durch die Messung der durch das Getriebe abgegebenen Schwingungssignale erkennbar. Die Erfindung nutzt diesen Zusammenhang aus, um auf einfache Weise eine Aussage über den Zustand des Getriebes zu erreichen. Dazu werden die Schwingungssignale durch eine Sensorik aufgenommenen, durch weitere Einheiten weiterverarbeitet und in einem Analog-Digital-Wandler in digitale Zeitdaten im Zeitbereich umgesetzt. Diese Zeitdaten können dann durch Transformationen umgerechnet und schließlich mit dem Ziel der Bestimmung von Kennwerten ausgewertet werden.

Um bei den üblicherweise komplizierten aber sich stets wiederholenden Bewegungen eines Roboters eine Vergleichbarkeit der zu unterschiedlichen Zeiten gemessenen Schwingungssignale zu erreichen, wird in einer vorteilhaften Ausgestaltung der Erfindung ein Messzyklus mit stets gleicher Länge bestimmt, bei welchem die Komponente jeweils eine bestimmte gleiche Bewegung ausführt. Wiederholt sich diese Bewegung der Komponente im zyklischen Bewegungsablauf des Roboters, so wird auch der Messzyklus aufs Neue parallel zur Bewegung durchgeführt. Im Messzyklus werden die Schwingungssignale des oder der Getriebe des Roboters und die Geschwindigkeit der Komponente des Roboters gemessen und aufgezeichnet. Um möglichst konstante Messbedingungen zu erhalten wird mindestens ein erster Teilbereich des Messzyklus festgesetzt, wobei innerhalb dieses Teilbereichs der Geschwindigkeitsistwert der Komponente innerhalb eines ersten Geschwindigkeitsbereichs verbleibt. Der erste Geschwindigkeitsbereich ist dabei so eng gewählt, dass die Geschwindigkeit im Rahmen der Messungenauigkeit und der Ungenauigkeiten der Regelung und Steuerung des Roboters als konstant anzusehen ist. Aus mindestens einem der im ersten Teilbereich des Messzyklus gemessenen Schwingungssignale wird mit einer ersten Transformation ein gleitender Effektivwertverlauf berechnet, welcher dann zur Kennwertbildung herangezogen wird.

Die im ersten Teilbereich des Messzyklus gemessenen Schwingungssignale können vorteilhafterweise in Segmente zerlegt werden und von den Segmenten kann jeweils ein Effektivwert bestimmt werden, wobei die Effektivwerte als Kurve über das Schwingungssignal aufgezeichnet werden. Die zu unterschiedlichen Zeiten aufgezeichneten Kurven werden dann über das Schwingungssignal als Kennlinienfeld zusammengefügt und aus dem Kennlinienfeld wird mindestens ein Kennwert gebildet, welcher eine Aussage über den Zustand des Getriebes ermöglicht. Besonders eine Erhöhung der Effektivwerte der Kurven jeweils zu einem ersten Zeitpunkt innerhalb des ersten Teilbereichs des Messzyklus kann als kritischer Zustand gewertet werden. Warnmeldungen können bei einem solchen kritischen Zustand an eine übergeordnete Leitebene abgesetzt werden, wenn die Recheneinheit mit dieser übergeordneten Leitebene kommuniziert.

Im Folgenden wird die Erfindung anhand der in den Figuren dargestellten Ausführungsbeispiele näher beschrieben und erläutert.

Es zeigen:
- FIG 1: eine schematische Darstellung eines Roboters und eines Systems zur Erkennung von Schäden am Getriebe des Roboters ,
- FIG 2: die Bewegung der Komponenten des Roboters während eines Messzyklus,
- FIG 3: ein Diagramm mit Messkurven von Zeitdaten und einem Geschwindigkeitsistwert während eines Messzyklus,
- FIG 4: eine Messkurve der Zeitdaten in einem ersten Teilbereich des Messzyklus,
- FIG 5: einen Effektivwertverlauf der Zeitdaten im ersten Teilbereich des Messzyklus,
- FIG 6: ein Kennlinienfeld mit zu unterschiedlichen Zeiten aufgezeichneten Kurven und
- FIG 7: jeweils zur gleichen Zeit aufgezeichnete Effektivwerte im Verlauf mehrerer Messungen.

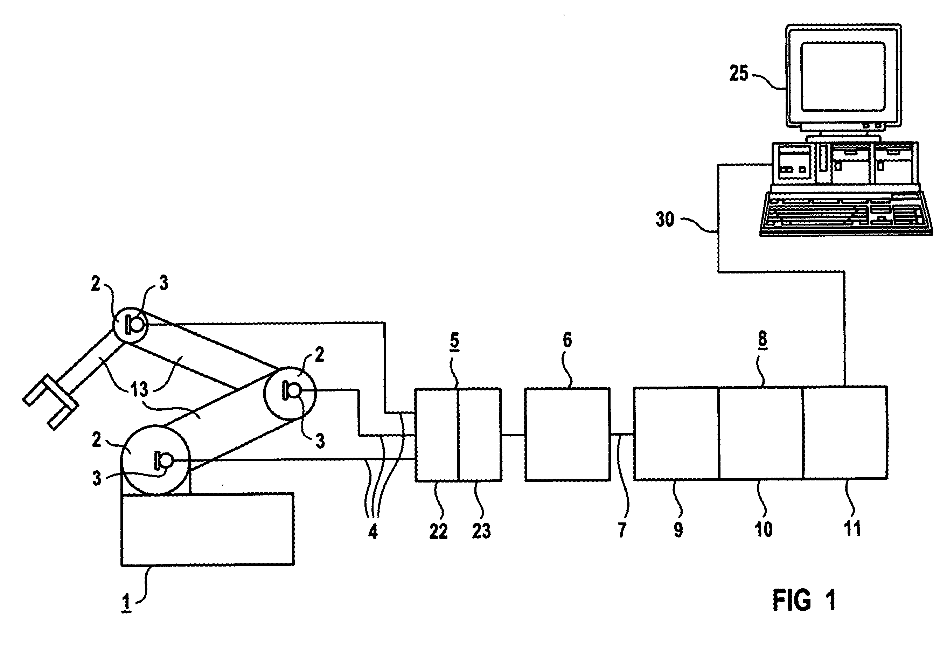

FIG 1 zeigt einen Roboter 1 mit mehreren Getrieben 2 und einer Komponente 13. An jedem der Getriebe 2 misst eine Sensorik 3 die Schwingungssignale 4, welche von einer Signalvorverarbeitung 5 weiter verarbeitet wird. Die Signalvorverarbeitung 5 enthält die Komponenten Verstärkung 22 und Tiefpassfilterung 23. Die vorverarbeiteten Signale werden weitergegeben an eine A/D-Wandlung 6 (Analog/Digital-Wandlung). Die A/D-Wandlung 6 gibt digitale Zeitdaten 7 an eine Recheneinheit 8. Die Recheneinheit 8 enthält einen Block zur Transformation 9, einen Bereich zur Kennwertberechung 7 und Mittel zur Kommunikation 11. Die Mittel zur Kommunikation 11 kommunizieren über eine Kommunikationsverbindung 30 mit einer Leitebene 25.

Die beweglichen Komponenten 13 des Roboters 1 bewegen sich im Ausführungsbeispiel um die Achsen der Getriebe 2. Aufgrund der ständigen Bewegungen der beweglichen Teile 13 des Roboters 1 sind die Getriebe 2 einem starken Verschleiß unterworfen. Sie müssen deshalb entweder rechtzeitig vor Ende ihrer Lebensdauer getauscht werden oder durch regelmäßige Inspektionen oder durch Diagnose überwacht werden. Das erfindungsgemäße Verfahren und System nutzt die Diagnose zur Früherkennung von Schäden der Getriebe 2. Dazu werden die Getriebe 2 jeweils mit einer Sensorik 3 überwacht. Diese Sensorik 3 enthält vibroakustische Messmittel oder Ultraschallmessmittel. Die vibroakustischen Messmittel können als Geschwindigkeitsoder Beschleunigungsaufnehmer ausgebildet sein. Die durch die Sensorik 3 aufgenommenen Messsignale sind Schwingungssignale 4, welche weitergeleitet werden an eine Signalvorverarbeitung 5. Im Ausführungsbeispiel werden die Schwingungssignale 4 in der Signalvorverarbeitung 5 einer Verstärkung 22 und einer Tiefpassfilterung 23 unterzogen. Die so verstärkten und gefilterten Signale werden an eine Baugruppe zur A/D-Wandlung 6 weitergegeben. Die am Ausgang der A/D-Wandlung 6 vorliegenden digitalen Zeitdaten 7 werden an eine Recheneinheit 8 gegeben. Die Recheneinheit kann z. B. als Standard-PC, als digitaler Signalprozessor oder als Mikrokontroller ausgebildet sein. In einem Block zur Transformation 9 der Recheneinheit 8 können aus den Zeitdaten 7 verschiedene Transformationen (FourierTransformation, Wavelet, Hüllkurve, usw.) berechnet werden. In einem zweiten Block zur Berechnung von Kennwerten 10 werden aus den transformierten Daten Kennwerte bestimmt, die einen Rückschluss auf die Lebensdauer der Getriebe oder auf einen sich anbahnenden Ausfall ermöglichen. Zur Weitergabe von Messdaten, Warnmeldungen, und Ähnlichem und zum Empfang von Befehlen ist die Recheneinheit 8 über Kommunikationsmittel 11 und eine Kommunikationsverbindung 30 mit einer übergeordneten Leitebene 25 verbunden. Über diese Kommunikation ist es möglich eine Warnung bei einem sich anbahnenden Ausfall abzusetzen. Ein Tausch betroffenen Getriebes kann nun z. B. rechtzeitig in den normalen Produktionsablauf eingeplant werden und es kommt nicht zu außerplanmäßigen Ausfällen der Produktion.

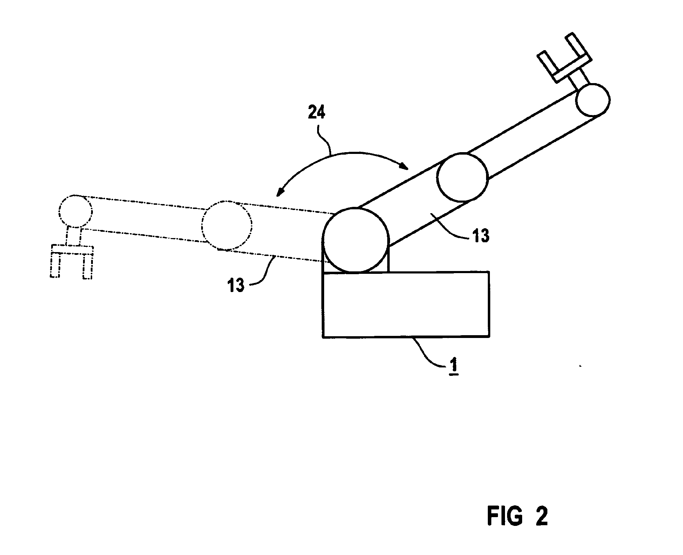

Das Verfahren und System nutzt die vibroakustische Diagnose zur frühzeitigen Erkennung von Schäden an Robotergetrieben 2, z. B. zur Erkennung von Zahnbrüchen an Planetgetrieben von Schweißrobotern. Dabei durchläuft ein Roboterarm mit konstanter Geschwindigkeit (Gleichlauf), abgesehen von den Beschleunigungsphasen, einen Messzyklus. Der Messzyklus besteht z. B. aus einem kompletten Schwenk vor und zurück. Der Geschwindigkeitsistwert 14 wird neben den Schwingungssignalen 4 mit aufgezeichnet um eine genaue Bestimmung der Gleichlaufphase zu ermöglichen. Aus dem Schwingungssignal 4 der Gleichlaufphase wird nun ein gleitender Effektivwertverlauf berechnet. Dazu wird das Signal in kleinere Segmente zerlegt. Die Länge und ggf. die Überlappung dieser Segmente kann vom Anwender vorgegeben werden. Von jedem Segment wird nun der Effektivwert bestimmt. Somit erhält man einen Effektivwertverlauf über das Schwingungssignal 4 der Gleichlaufphase. Werden nun Messungen zu unterschiedlichen Zeitpunkten (Tagen) getätigt und die Effektivwertverläufe berechnet, kann man diese zu einem Kennlinienfeld 20 zusammenfügen. Aus diesem Kennlinienfeld 20 ist es nun möglich den Trend des Effektivwertes zu einem bestimmten Zeitpunkt innerhalb des Messzyklus über die einzelnen, aufeinander folgenden Messungen abzulesen. Bahnt sich ein Schaden an, erhöht sich der Effektivwert mit der Zeit, bis eine kritische Schwelle erreicht wird. Es sind auch andere Kennwertverläufe denkbar, die zur Auswertung herangezogen werden können. Diese können sich z. B. aus einzelnen Frequenzen, Frequenzverhältnissen oder Waveletkoeffizienten in den bestimmten Segmenten berechnen. Das Verfahren wird anhand FIG 2 bis FIG 7 im Folgenden genauer beschrieben.

FIG 2 zeigt schematisch den Roboter 1 bei der Durchführung einer Bewegung 24 innerhalb eines Messzyklus. Dargestellt ist jeweils die Anfangs- bzw. Endposition einer Komponente 13, in diesem Fall eines Roboterarms, in einem Bewegungszyklus. Der momentane Geschwindigkeitsistwert 14 der Komponente 13 ist im System als Steuer- oder Regelwert bekannt oder wird durch eine Geschwindigkeitsmessung bestimmt. Im Falle der Bewegung der Komponenten 13 um eine Getriebeachse des Roboters 1 ist der Geschwindigkeitsistwert 14 als Winkelgeschwindigkeit bzw. als Drehzahl ausgebildet. Die Bewegung 24 wird zyklisch wiederholt ausgeführt.

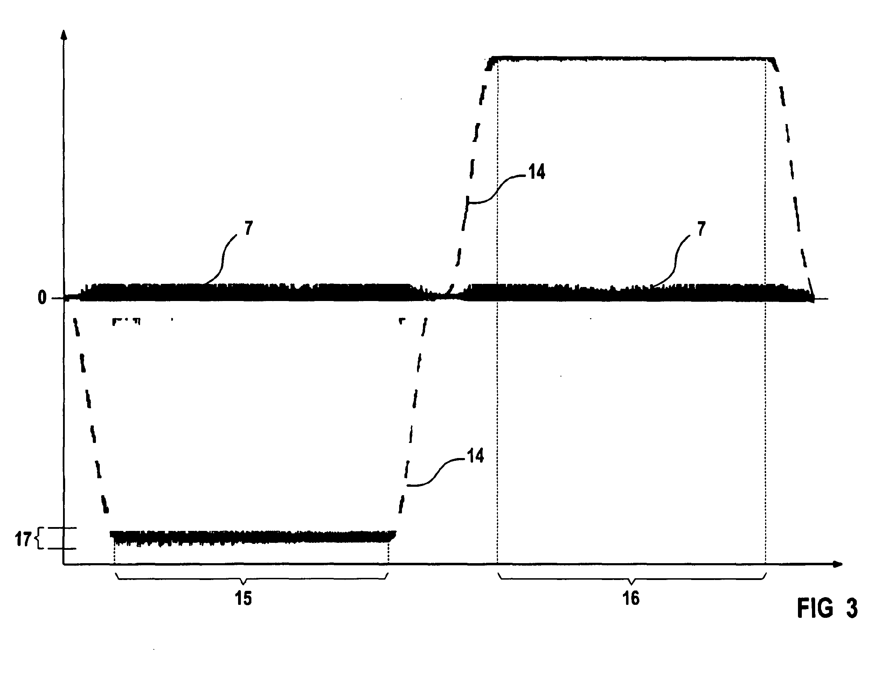

Die gewonnenen Messwerte bzw. die schon im System bekannten Steuerwerte sind in FIG 3 dargestellt. Das dargestellte Diagramm enthält die aus den Schwingungssignalen gewonnenen Zeitdaten 7 sowie den Geschwindigkeitsistwert 14 der Komponente 13. Gegen die waagerechte Achse ist die Zeit aufgetragen, die senkrechte Achse ist mit der Drehzahl für den Geschwindigkeitsistwert 14 bzw. mit der Amplitude für die Zeitdaten 7 der Schwingungssignale skaliert. Der Nullpunkt ist mit dem Bezugszeichen 0 gekennzeichnet. Die Darstellung zeigt den Verlauf der Messdaten während eines Messzyklus, d. h. während der Durchführung einer Bewegung 24 der Komponente 13 des Roboters 1. Im Verlauf des Geschwindigkeitsistwerts 14 sind deutlich die Phasen negativer und positiver Beschleunigung zu erkennen. Während eines ersten Teilbereichs 15 und eines zweiten Teilbereichs 16 bewegt sich die Komponente 13 mit einer näherungsweise konstanten Geschwindigkeit. So ist der Geschwindigkeitsistwert 14 im ersten Teilbereich 15 dadurch gekennzeichnet, dass er einen ersten Geschwindigkeitsbereich 17 nicht verlässt. Da sich die Bewegung 24 der Komponente 13 im Bewegungsablauf des Roboters 1 zyklisch wiederholt, lassen sich auch Messwerte entsprechend der in FIG 3 dargestellten Art zyklisch wiederholt aufzeichnen und miteinander vergleichen. Für diesen Vergleich wird im Ausführungsbeispiel ein erster Teilbereich 15 mit relativ konstanter Geschwindigkeit 14 bestimmt und es werden die in diesem Teilbereich 15 aufgezeichneten Zeitdaten 7 des Schwingungssignals des Getriebes 2 des Roboters 1 ausgewertet.

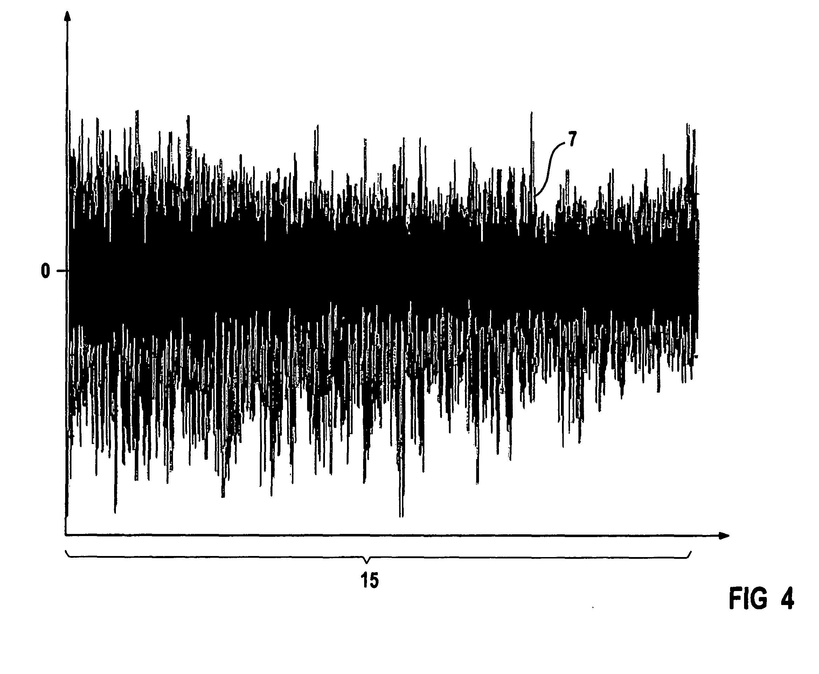

Einen solchen Ausschnitt aus den Zeitdaten 7 zeigt FIG 4. Die waagerechte Achse ist wiederum als Zeitachse skaliert und deckt in diesem Fall den Zeitbereich 15 ab. Die senkrechte Achse in FIG 4 ist ein Ausschnitt der senkrechten Achse der FIG 3, der Nullpunkt der senkrechten Achse ist wiederum mit dem Bezugszeichen 0 gekennzeichnet. Bei den Zeitdaten 7 handelt es sich um die vorverarbeiteten und digitalisierten Schwingungssignale 4.

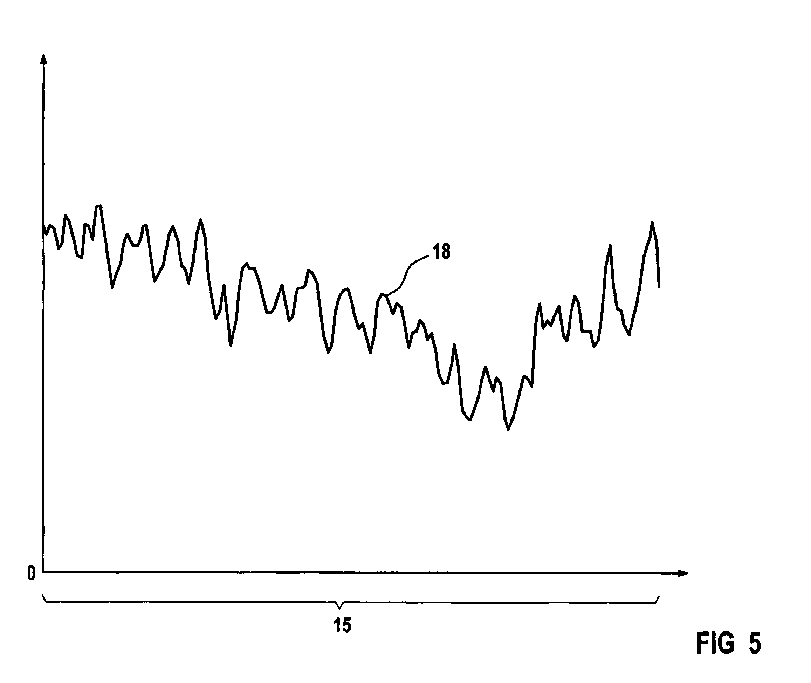

Die Zeitdaten 7 werden im nächsten Schritt des vorgeschlagenen Verfahrens einer Transformation 9 unterzogen. Im Ausführungsbeispiel handelt es sich bei der Transformation um eine Effektivwertberechung. Ein solcher aus den Zeitdaten 7 bzw. aus den Schwingungssignalen 4 berechneter gleitender Effektivwertverlauf 18 ist in FIG 5 dargestellt. Die waagerechte Achse gibt wiederum die verstrichene Zeit im Teilbereich 15 des Messzyklus wieder, gegen die senkrechte Achse ist im Diagramm der FIG 5 der Effektivwert aufgetragen.

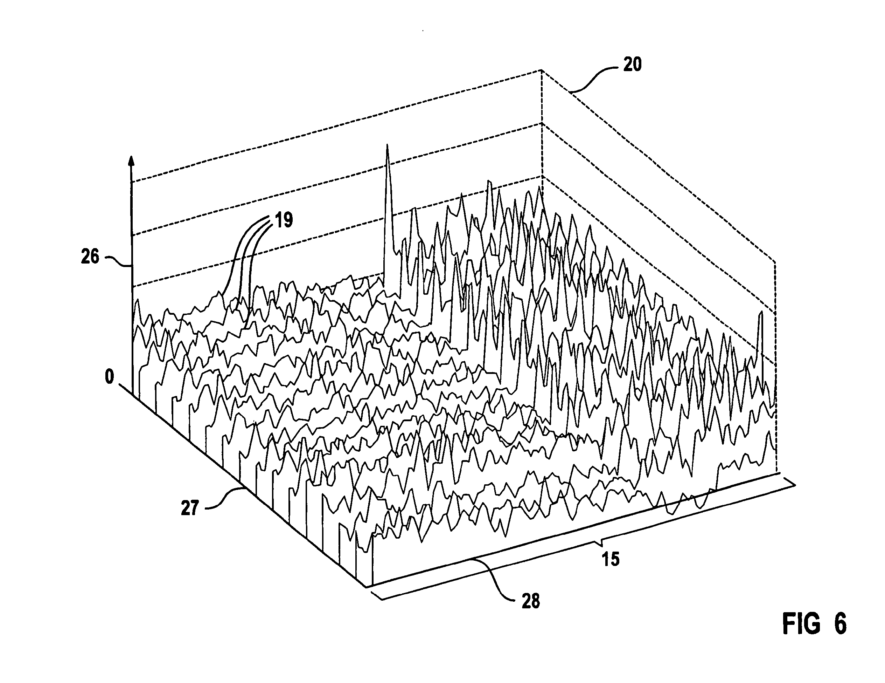

Die im ersten Teilbereich 15 des Messzyklus gemessenen Schwingungssignale 4 können in Segmente zerlegt werden und von diesen Segmenten kann jeweils ein Effektivwert bestimmt werden, wobei dann diese Effektivwerte als Kurve 19 über das Schwingungssignal aufgezeichnet werden. In FIG 6 sind die zu unterschiedlichen Zeiten aufgezeichneten Kurven 19 über das Schwingungssignal als Kennlinienfeld 20 dargestellt. Gegen die mit dem Bezugszeichen 28 gekennzeichnete Achse ist wiederum die Zeit bzw. der Teilbereich 15 abgebildet, gegen die senkrechte Achse 26 wurde der Effektivwert aufgetragen und schließlich gegen die mit dem Bezugszeichen 27 gekennzeichnete Achse die einzelnen Messungen in Form der aufgezeichneten Kurven 19. Aus dem in FIG 6 dargestellten Kennlinienfeld 20, welches durch die Recheneinheit 8 berechnet wurde, lassen sich in einem weiteren Schritt Kennwerte bestimmen, welche eine Aussage über den Zustand des Getriebes 2 ermöglichen.

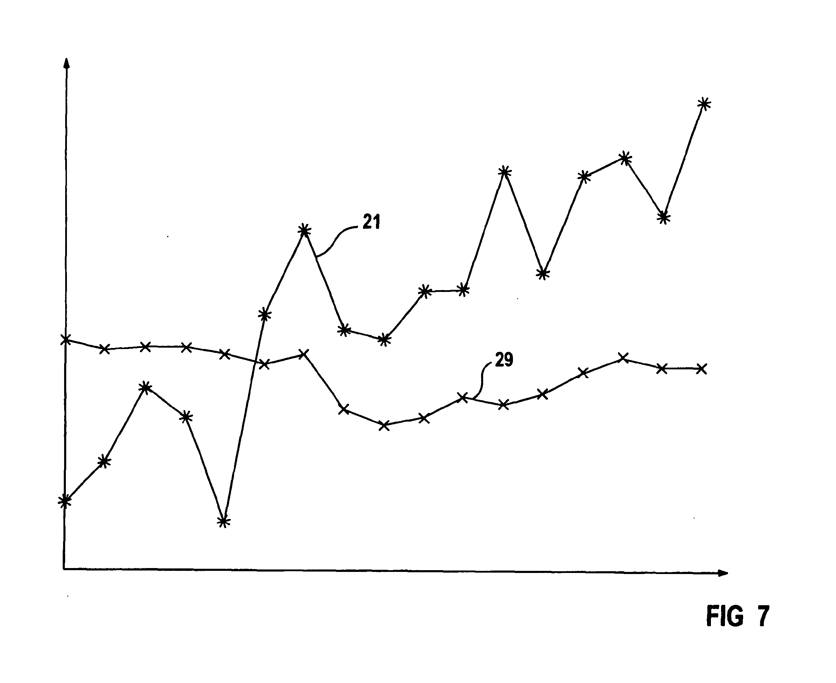

In FIG 7 sind die Verläufe zweier solcher Kennwerte 21, 29 dargestellt. Gegen die senkrechte Achse ist jeweils der Effektivwert einer der Kurven 19 zu einer jeweils gleichen Zeit innerhalb des ersten Teilbereichs 15 wiedergegeben. Dabei sind die in aufeinanderfolgenden Messungen gewonnenen Effektivwerte gegen die waagerechte Achse in chronologischer Reihenfolge aufgezeichnet. Im Ergebnis erhält man jeweils einen Effektivwerttrend der Kennwerte 21, 29. Diese Effektivwerttrends lassen sich nun auf das Über- oder Unterschreiten gewisser Schwellwerte oder gewisser Wertebereiche überwachen. Als Ergebnis der Überwachung kann ein Alarm generiert werden, welcher an eine übergeordnete Leitebene 25 weitergeleitet wird. Die Überwachung der Kennwerte 21, 29 sowie die Bildung von möglichen Alarmsignalen wird dabei automatisch und selbständig durch die Recheneinheit 8 durchgeführt. Die Recheneinheit 8 bedient sich dazu vorher festgelegter oder dynamisch bestimmter Regeln.

Zusammengefasst betrifft die Erfindung somit ein Verfahren und System zur Erkennung von Schäden an mindestens einem Getriebe 2 eines Roboters 1, welches die Diagnose von Robotergetrieben verbessert. Beim vorgeschlagenen Verfahren werden durch eine Sensorik 3 am Getriebe 2 in Messzyklen Schwingungssignale 4 gemessen, die Schwingungssignale 4 einer Signalvorverarbeitung 5 und einer Analog/Digital-Wandlung 6 unterzogen, die vorverarbeiteten und gewandelten Schwingungssignale als Zeitdaten 7 einer Recheneinheit 8 zugeführt, die Zeitdaten 7 durch die Recheneinheit 8 mittels Transformationen 9 in zweite Daten umgerechnet und aus den zweiten Daten Kennwerte 12 zur Ermittlung einer Aussage über den Zustand des Getriebes 2 bestimmt.

## Patentansprüche

1. Verfahren zur Erkennung von Schäden an mindestens einem Getriebe (2) eines Roboters (1), bei welchem Verfahren durch eine Sensorik (3) am Getriebe (2) in Messzyklen Schwingungssignale (4) gemessen werden, die Schwingungssignale (4) einer Signalvorverarbeitung (5) und einer Analog/Digital-Wandlung (6) unterzogen werden, die vorverarbeiteten und gewandelten Schwingungssignale als Zeitdaten (7) einer Recheneinheit (8) zugeführt werden, die Zeitdaten (7) durch die Recheneinheit (8) mittels Transformationen (9) in zweite Daten umgerechnet werden und aus den zweiten Daten Kennwerte (12) zur Ermittlung einer Aussage über den Zustand des Getriebes (2) bestimmt werden.

2. Verfahren nach Anspruch 1,
**dadurch gekennzeichnet,**
**dass** eine Geschwindigkeit einer Komponente (13) des Roboters (1) gemessen und als Geschwindigkeitsistwert (14) aufgezeichnet wird, wobei die Komponente (13) während des Messzyklus jeweils eine sich wiederholende Bewegung ausführt, wobei mindestens ein erster Teilbereich (15) des Messzyklus festgesetzt wird, welcher durch das Verbleiben des Geschwindigkeitsistwerts (14) der Komponente (13) innerhalb eines ersten Geschwindigkeitsbereichs (17) gekennzeichnet ist und wobei aus mindestens einem der im ersten Teilbereich (15) des Messzyklus gemessenen Schwingungssignale (4) ein gleitender Effektivwertverlauf (18) berechnet wird.

3. Verfahren nach Anspruch 2,
**dadurch gekennzeichnet,**
**dass** das im ersten Teilbereich (15) des Messzyklus gemessene Schwingungssignal (4) in Segmente zerlegt wird und von den Segmenten jeweils ein Effektivwert bestimmt wird, wobei die Effektivwerte als Kurve (19) über das Schwingungssignal aufgezeichnet werden.

4. Verfahren nach Anspruch 3,
**dadurch gekennzeichnet,**
**dass** zu unterschiedlichen Zeiten aufgezeichnete Kurven (19) über das Schwingungssignal als Kennlinienfeld (20) zusammengefügt werden und dass aus dem Kennlinienfeld (20) mindestens ein Kennwert gebildet wird, wobei der Kennwert eine Aussage über den Zustand des Getriebes (2) ermöglicht.

5. Verfahren nach Anspruch 4,
**dadurch gekennzeichnet,**
**dass** als erster Kennwert (21) der Effektivwert der Kurven (19) jeweils zu einem ersten Zeitpunkt innerhalb des ersten Teilbereichs (15) des Messzyklus dient und dass eine Erhöhung des ersten Kennwerts (21) über eine Schwelle hinaus als kritischer Zustand gewertet wird.

6. Verfahren nach einem der vorhergehenden Ansprüche,
**dadurch gekennzeichnet,**
**dass** die Sensorik (3) vibroakustische Messmittel aufweist.

7. Verfahren nach einem der vorhergehenden Ansprüche,
**dadurch gekennzeichnet,**
**dass** die Signalvorverarbeitung (5) eine Verstärkung (22) und eine Tiefpassfilterung (23) aufweist.

8. Verfahren nach einem der vorhergehenden Ansprüche,
**dadurch gekennzeichnet,**
**dass** die Transformationen (9) als Fourier-Transformationen ausgebildet sind.

9. Verfahren nach einem der vorhergehenden Ansprüche,
**dadurch gekennzeichnet,**
**dass** die Recheneinheit (8) mit einer übergeordneten Leitebene (25) kommuniziert und an die übergeordnete Leitebene (25) Warnmeldungen bei einem kritischen Zustand des Getriebes (2) überträgt.

10. Verfahren nach einem der Ansprüche 3 bis 9,
**dadurch gekennzeichnet,**
**dass** die Länge der Segmente durch einen Anwender vorgegeben werden kann.

11. System zur Erkennung von Schäden an mindestens einem Getriebe (2) eines Roboters (1), welches
- eine Sensorik (3) am Getriebe (2) zur Messung von Schwingungssignalen (4) in Messzyklen,
- eine Signalvorverarbeitung (5) und eine Analog/Digital-Wandlung (6) zur Verarbeitung bzw. Wandlung der Schwingungssignale (4) in Zeitdaten (7) und
- eine Recheneinheit (8) zur Umrechnung der Zeitdaten (7) mittels Transformationen (9) in zweite Daten und zur Bestimmung von Kennwerten (12) aus den zweiten Daten aufweist,
wobei die Kennwerte (12) zur Ermittlung einer Aussage über den Zustand des Getriebes (2) vorgesehen sind.

12. System nach Anspruch 11,
**dadurch gekennzeichnet,**
**dass** erste Mittel zur Messung einer Geschwindigkeit einer Komponente (13) des Roboters (1) und zur Aufzeichnung der Geschwindigkeit als Geschwindigkeitsistwert (14) vorgesehen sind, wobei die Komponente (13) durch die Ausführung einer sich während des Messzyklus jeweils wiederholenden Bewegung gekennzeichnet ist, wobei mindestens ein erster Teilbereich (15) des Messzyklus durch das Verbleiben des Geschwindigkeitsistwerts (14) der Komponente (13) innerhalb eines ersten Geschwindigkeitsbereichs (17) gekennzeichnet ist und wobei die Recheneinheit (8) zur Berechnung eines gleitenden Effektivwertverlaufs (18) aus mindestens einem der im ersten Teilbereich (15) des Messzyklus gemessenen Schwingungssignale (4) vorgesehen ist.

13. System nach Anspruch 12,
**dadurch gekennzeichnet,**
**dass** Segmente als Ergebnis einer Zerlegung des im ersten Teilbereich (15) des Messzyklus gemessenen Schwingungssignals (4) vorgesehen sind und das die Recheneinheit (8) zur Berechnung eines Effektivwerts von den Segmenten und zur Aufzeichnung der Effektivwerte als Kurve (19) über das Schwingungssignal vorgesehen ist.

14. System nach Anspruch 13,
**dadurch gekennzeichnet,**
**dass** ein Kennlinienfeld (20) als Zusammenfügung von zu unterschiedlichen Zeiten aufgezeichneten Kurven (19) über das Schwingungssignal vorgesehen ist und die Recheneinheit (8) zur Bildung mindestens eines Kennwerts aus dem Kennlinienfeld (20) vorgesehen ist, wobei der Kennwert eine Aussage über den Zustand des Getriebes (2) ermöglicht.

15. System nach Anspruch 14,
**dadurch gekennzeichnet,**
**dass** als erster Kennwert (21) der Effektivwert der Kurven (19) jeweils zu einem ersten Zeitpunkt innerhalb des ersten Teilbereichs (15) des Messzyklus dient und dass eine Erhöhung des ersten Kennwerts (21) über eine Schwelle hinaus als kritischer Zustand gewertet wird.

16. System nach einem der Ansprüche 11 bis 15,
**dadurch gekennzeichnet,**
**dass** die Sensorik (3) vibroakustische Messmittel aufweist.

17. System nach einem der Ansprüche 11 bis 16,
**dadurch gekennzeichnet,**
**dass** die Signalvorverarbeitung (5) eine Verstärkung (22) und eine Tiefpassfilterung (23) aufweist.

18. System nach einem der Ansprüche 11 bis 17,
**dadurch gekennzeichnet,**
**dass** die Transformationen (9) als Fourier-Transformationen ausgebildet sind.

19. System nach einem der Ansprüche 11 bis 18,
**dadurch gekennzeichnet,**
**dass** die Recheneinheit (8) Mittel zur Kommunikation (11) mit einer übergeordneten Leitebene (25) aufweist, die zur Übertragung von Warnmeldungen bei einem kritischen Zustand des Getriebes (2) an die übergeordnete Leitebene (25) vorgesehen sind.

20. System nach einem der Ansprüche 13 bis 19,
**dadurch gekennzeichnet,**
**dass** die Länge der Segmente durch einen Anwender vorgebbar ist.

## Claims

1. Method for identifying damage to at least one transmission (2) of a robot (1), in which method vibration signals (4) are measured in measurement cycles by a sensor system (3) at the transmission (2), said vibration signals (4) are subjected to signal pre-processing (5) and analogue/digital conversion (6), the pre-processed and converted vibration signals are fed to a computation unit (8) as time data (7), the time data (7) is converted by the computation unit (8) to second data by means of transformations (9) and characteristic values (12) are defined from the second data to determine a conclusion relating to the state of the transmission (2).

2. Method according to claim 1,
**characterised in that**
a speed of a component (13) of the robot (1) is measured and recorded as an actual speed value (14), with the component (13) executing a motion that is repeated respectively during the measurement cycle, with at least a first sub-region (15) of the measurement cycle being established, which is **characterised by** the actual speed value (14) of the component (13) remaining within a first speed range (17) and with a sliding root-mean-square value profile (18) being calculated from at least one of the vibration signals (4) measured in the first sub-region (15) of the measurement cycle.

3. Method according to claim 2,
**characterised in that**
the vibration signal (4) measured in the first sub-region (15) of the measurement cycle is broken down into segments and a root-mean-square value is determined respectively for the segments, with the root-mean-square value being plotted as a curve (19) over the vibration signal.

4. Method according to claim 3,
**characterised in that**
curves (19) plotted at different times over the vibration signal are combined as a characteristics field (20) and at least one characteristic value is formed from the characteristics field (20), with the characteristic value allowing a conclusion relating to the state of the transmission (2).

5. Method according to claim 4,
**characterised in that**
the root-mean-square value of the curves (19) respectively at a first time within the first sub-region (15) of the measurement cycle serves as the first characteristic value (21) and an increase in the first characteristic value (21) above a threshold is evaluated as a critical state.

6. Method according to one of the preceding claims,
**characterised in that**
the sensor system (3) has vibro-acoustic measuring means.

7. Method according to one of the preceding claims,
**characterised in that**
the signal pre-processing system (5) has an amplifier system (22) and a low-pass filter system (23).

8. Method according to one of the preceding claims,
**characterised in that**
the transformations (9) are embodied as Fourier transformations.

9. Method according to one of the preceding claims,
**characterised in that**
the computation unit (8) communicates with a higher-order management level (25) and transmits warning messages to the higher-order management level (25) when the transmission (2) is in a critical state.

10. Method according to one of claims 3 to 9,
**characterised in that**
the length of the segments can be predefined by a user.

11. System for identifying damage to at least one transmission (2) of a robot (1), which has
- a sensor system (3) at the transmission (2) for measuring vibration signals (4) in measurement cycles,
- a signal pre-processing system (5) and an analogue/digital converter (6) for pre-processing and/or converting the vibration signals (4) to time data (7) and
- a computation unit (8) for converting the time data (7) to second data by means of transformations (9) and for defining characteristic values (12) from the second data,
with the characteristic values (12) being provided to determine a conclusion relating to the state of the transmission (2).

12. System according to claim 11,
**characterised in that**
first means are provided for measuring a speed of a component (13) of the robot (1) and for plotting the speed as an actual speed value (14), with the component (13) being **characterised by** the execution of a motion that is repeated respectively during the measurement cycle, with at least a first sub-region (15) of the measurement cycle being **characterised by** the actual speed value (14) of the component (13) remaining within a first speed range (17) and with the computation unit (8) being provided to calculate a sliding root-mean-square value profile (18) from at least one of the vibration signals (4) measured in the first sub-region (15) of the measurement cycle.

13. System according to claim 12,
**characterised in that**
segments are provided as a result of the breaking down of the vibration signal (4) measured in the first sub-region (15) of the measurement cycle and the computation unit (8) is provided to calculate a root-mean-square value for the segments and to plot the root-mean-square values as a curve (19) over the vibration signal.

14. System according to claim 13,
**characterised in that**
a characteristics field (20) is provided as a combination of curves (19) plotted at different times over the vibration signal and the computation unit (8) is provided to form at least one characteristic value from the characteristics field (20), with the characteristic value allowing a conclusion relating to the state of the transmission (2).

15. System according to claim 14,
**characterised in that**
the root-mean-square value of the curves (19) respectively at a first time within the first sub-region (15) of the measurement cycle serves as the first characteristic value (21) and an increase in the first characteristic value (21) above a threshold is evaluated as a critical state.

16. System according to one of claims 11 to 15,
**characterised in that**
the sensor system (3) has vibro-acoustic measuring means.

17. System according to one of claims 11 to 16,
**characterised in that**
the signal pre-processing system (5) has an amplifier system (22) and a low-pass filter system (23).

18. System according to one of claims 11 to 17,
**characterised in that**
the transformations (9) are embodied as Fourier transformations.

19. System according to one of claims 11 to 18,
**characterised in that**
the computation unit (8) has means for communicating (11) with a higher-order management level (25), which are provided to transmit warning messages to the higher-order management level (25) when the transmission (2) is in a critical state.

20. System according to one of claims 13 to 19,
**characterised in that**
the length of the segments can be predefined by a user.

## Revendications

1. Procédé de détection d'endommagements d'au moins une transmission (2) d'un robot (1), procédé dans lequel des signaux oscillants (4) sont mesurés dans des cycles de mesure par une technique de capteurs (3) sur la transmission, les signaux oscillants (4) sont soumis à un traitement préalable de signal (5) et à une conversion analogique/numérique (6), les signaux oscillants traités au préalable et convertis sont envoyés comme données temporelles (7) à une unité de calcul (8), les données temporelles (7) sont transformées en des deuxièmes données au moyens de transformations (9) par l'unité de calcul (8) et des valeurs caractéristiques (12) sont déterminées à partir des deuxièmes données pour se prononcer sur l'état de la transmission (2).

2. Procédé selon la revendication 1, **caractérisé en ce qu'**une vitesse d'un composant (13) du robot (1) est mesurée et enregistrée comme valeur de vitesse réelle (14), le composant (13) effectuant pendant le cycle de mesure un mouvement répétitif, au moins un premier sous-domaine (15) du cycle de mesure étant détecté qui est **caractérisé en ce que** la valeur de vitesse réelle (14) du composant (13) reste à l'intérieur d'un premier domaine de vitesse (17) et une courbe mobile de valeurs efficaces (18) étant calculée à partir d'au moins un des signaux oscillants (4) mesurés dans le premier sous-domaine (15) du cycle de mesure.

3. Procédé selon la revendication 2, **caractérisé en ce que** le signal oscillant (4), mesuré dans le premier sous-domaine (15) du cycle de mesure, est décomposé en segments et une valeur efficace est déterminée à partir de chacun des segments, les valeurs efficaces étant enregistrées sous la forme d'une courbe (19) relative au signal oscillant.

4. Procédé selon la revendication 3, **caractérisé en ce que** des courbes (19), enregistrées à des instants différents et relatives au signal oscillant, sont rassemblées sous la forme d'un champ de courbes caractéristiques (20) et **en ce qu'**au moins une valeur caractéristique est formée à partir du champ de courbes caractéristiques (20), la valeur caractéristique permettant de se prononcer sur l'état de la transmission (2).

5. Procédé selon la revendication 4, **caractérisé en ce que** la valeur efficace des courbes (19), en un premier instant à l'intérieur du premier sous-domaine (15) du cycle de mesure, sert de premières valeurs caractéristiques (21) et **en ce qu'**une élévation de la première valeur caractéristique (21) au-dessus d'un seuil est considérée comme un état critique.

6. Procédé selon l'une des revendications précédentes, **caractérisé en ce que** la technologie de capteurs (3) comporte des moyens de mesure de signaux vibrants acoustiques.

7. Procédé selon l'une des revendications précédentes, **caractérisé en ce que** le prétraitement de signal (5) comporte une amplification (22) et un filtrage de passe-bas (23).

8. Procédé selon l'une des revendications précédentes, **caractérisé en ce que** les transformations (9) sont des transformations de Fourier.

9. Procédé selon l'une des revendications précédentes, **caractérisé en ce que** l'unité de calcul (8) communique avec un niveau de commande hiérarchiquement supérieur (25) et transmet des messages d'avertissement au niveau de commande hiérarchiquement supérieur (25) lorsque la transmission (2) se trouve dans un état critique.

10. Procédé selon l'une des revendications 3 à 9, **caractérisé en ce que** la longueur des segments peut être prescrite par un utilisateur.

11. Système de détection d'endommagements au niveau d'au moins un engrenage (2) d'un robot (1), lequel le système comporte
- une technologie de capteurs (3) au niveau de la transmission (2) destinée à mesurer les signaux oscillants (4) dans des cycles de mesure,
- un traitement préalable de signal (5) et une conversion analogique/numérique destiné à traiter au préalable respectivement et à convertir les signaux oscillants (4) en données temporelles (7) et
- une unité de calcul (8) destinée à transformer les données temporelles (7) en deuxièmes données au moyen de transformations (9) et à déterminer des valeurs caractéristiques (12) à partir des deuxièmes données,
les valeurs caractéristiques (12) permettant de se prononcer sur l'état de la transmission (2).

12. Système selon la revendication 11, **caractérisé en ce qu'**il est prévu des premiers moyens permettant de mesurer une vitesse d'un composant (13) du robot (1) et d'enregistrer la vitesse comme valeur de vitesse réelle (14), le composant (13) est **caractérisé en ce qu'**il effectue un mouvement répétitif pendant le cycle de mesure, au moins un premier sous-domaine (15) du cycle de mesure étant **caractérisé en ce que** la valeur de vitesse réelle (14) du composant (13) reste à l'intérieur d'un premier domaine de vitesse (17) et l'unité de calcul (8) étant destinée à calculer une courbe mobile de valeurs efficaces (18) à partir d'au moins un des signaux oscillants (4) mesurés dans le premier sous-domaine (15) du cycle de mesure.

13. Système selon la revendication 12, **caractérisé en ce que** des segments sont prévus comme résultat d'une décomposition du signal oscillant (4) mesuré dans le premier sous-domaine (15) du cycle de mesure et **en ce que** l'unité de calcul (8) est destinée à calculer une valeur efficace à partir des segments et à enregistrer les valeurs efficaces sous la forme de courbes (19) relatives au signal oscillant.

14. Système selon la revendication 13, **caractérisé en ce qu'**une courbe caractéristique (20) est prévue sous la forme d'un rassemblement de courbes (19) enregistrées à différents instants et relatives au signal oscillant et **en ce que** l'unité de calcul (8) est destinée à former au moins une valeur caractéristique à partir du champ de courbes caractéristiques (20), la valeur caractéristique permettant de se prononcer sur l'état de la transmission (2).

15. Système selon la revendication 14, **caractérisé en ce que** la valeur efficace des courbes (19), à un premier instant à l'intérieur du premier sous-domaine (15) du cycle de mesure, sert de première valeur caractéristique (21) et **en ce qu'**une élévation de la première valeur caractéristique (21) au-dessus d'un seuil est considérée comme un état critique.

16. Système selon l'une des revendications 11 à 15, **caractérisé en ce que** la technologie de capteurs (3) comporte des moyens de mesure de signaux vibrants acoustiques.

17. Système selon l'une des revendications 11 à 16, **caractérisé en ce que** le prétraitement de signal (5) comporte une amplification (22) et un filtrage de passe-bas (23).

18. Système selon l'une des revendications 11 à 17, **caractérisé en ce que** les transformations (9) sont des transformations de Fourier.

19. Système selon l'une des revendications 11 à 18, **caractérisé en ce que** l'unité de calcul (8) comporte des moyens de communication (11) permettant de communiquer avec un niveau de commande hiérarchiquement supérieur (25), lesquels moyens de communication sont prévus pour transmettre des messages d'avertissement au niveau de commande hiérarchiquement supérieur (25) lorsque la transmission (2) se trouve dans un état critique.

20. Système selon l'une des revendications 13 à 19, **caractérisé en ce que** la longueur des segments peut être prescrite par un utilisateur.
